# EUROPEAN PATENT SPECIFICATION

(11) **EP 2 504 238 B1**
(45) Date of publication and mention of the grant of the patent: **04.09.2013**
(21) Application number: 10805522.9
(22) Date of filing: 22.11.2010
(51) Int. Cl.: B64F 1/36

(54) **MACHINE FOR EXTENDING AND RETRACTING A CORRUGATED PIPE**
MASCHINE ZUR VERLÄNGERUNG UND EINZIEHUNG EINES WELLROHRS
MACHINE POUR ÉTENDRE ET RÉTRACTER UN TUYAU ONDULÉ EXTENSIBLE

(30) Priority: 26.11.2009 IT RM20090623
(43) Date of publication of application: 03.10.2012
(73) Proprietor: Stazi, Enio, 00040 Ardea (RM) (IT); Stazi, Camillo, 00040 Ardea (RM) (IT)
(72) Inventor: Stazi, Enio, 00040 Ardea (RM) (IT); Stazi, Camillo, 00040 Ardea (RM) (IT)
(74) Representative: Ciceri, Fabio
(86) International application number: PCT/IT2010/000465
(87) International publication number: WO 2011/064808

(56) References cited:
- US-A- 4 246 675
- US-A1- 2004 209 565
- US-A1- 2009 197 516

## Description

### TECHNICAL FIELD

The present invention relates to a machine for extending and retracting an extendable corrugated hose. Such a machine can be embodied in an air conditioning supplying system. Further, the machine can be mounted on a vehicle for discharging liquid wastes, as disclosed in the U.S. patent 5,023,959 in the name of Mercer, and also for other uses.

### BACKGROUND ART

In the following, only by way of example, reference will be made to the field of air conditioning supplying systems, for which there are several machines in the state of art. Among others, U.S. Patent 6,776,705 in the name of Bombardi et al. discloses an apparatus for supplying conditioned air generally to a stationary aircraft. More specifically, Bombardi et al. provides a housing within which there is an extendable hose being provided with protrusions, an inner tube within the housing and the same extendable hose, for sustaining the extendable hose, a series of pairs of a drive and a linear actuator for releasing the drive from the extendable hose. The inner tube makes complicate the apparatus and does not allow the extendable hose, exiting the apparatus, to form sharp bends. It often occurs that the extendable hose is submitted to such bends, principally because the extendable hose has to face variations in height for the attachment to an aircraft fuselage, and the inner tube prevents the extendable hose to be bent. Further, each actuator has its own motor and this makes complicate and expensive the apparatus.

The U.S. Patent application 20090197516 in the name of Wright et al. discloses an extendable hose management system for supplying conditioned air to a stationary aircraft. Also according to this patent application the extendable hose, being provided with protrusions, is within a housing, and an inner mandrel is inside the housing and the same extendable hose in order to sustain the latter. The system has a plurality of belt drives engaging protrusions in the hose and being driven all together through a chain by one motor.

Even if in the patent application to Wright et al. the common operation of all belt drives is achieved by means of a driving chain, the inner mandrel involves yet a restriction for the system.

Further, as found in the prior art system, an air flow travelling in the extendable hose undergoes turbulence for the reason that the profile of the hose walls is not smooth and exhibits circumferential grooves due to projecting spirals strengthening the hose.

U.S. Patent No. 4,246,675 describes an industrial vacuum apparatus, in which a hose is wound upon and unwound from a drum by a reversible motor which drives four rollers tangentially engaging the hose. The four rollers, preferably small pneumatic tires inflated to a low pressure, are driven in pairs by the shaft of the reversible motor that drives the shafts of respective first rollers by means of a transfer gear, shafts that in turn drive by gears the shafts of second rollers of the pairs. The rollers do not appear as a suitable means to move the hose by friction, nor the gears are efficient to transfer the motion to the pairs of shaft.

### DISCLOSURE OF INVENTION

The present invention aims to overcome the restrictions of the prior art.

In particular, an object of the invention is to provide a machine of the kind above described for extending and retracting uniformly the extendable hose without deforming the cross-section of the hose i.e. without squeezing it. Further, an object of the invention is to provide a machine that is able to bend the hose also with elbows, as there is no need of a mandrel within the hose for the machine's operation.

Another object of the invention is to provide a machine that has an efficient common operation of all the drives.

Yet another object is to make uniform the flow of a fluid travelling along the extendable hose.

The specified objects and others are substantially achieved by a machine for extending and retracting an extendable corrugated hose, comprising the technical features set forth in one or more of the accompanying claims.

### BRIEF DESCRIPTION OF DRAWINGS

Further features and advantages of the present invention will appear mostly clear by an indicative and not limiting description of two preferred embodiments as illustrated in the enclosed drawings, in which:
- figure 1 is a partial front view of a stationary aircraft connected to a passenger boarding bridge being provided with a conditioned air system that uses a machine according to the present invention for delivering conditioned air into the aircraft;
- figure 2 is an enlarged fragmentary side view in figure 1, that shows in a partially cross-sectioned way a first embodiment of the machine according to the invention;
- figure 3 is a furthermore enlarged fragmentary side view in figure 2, that shows in a partially cross-sectioned way a drive assembly of the first embodiment of the machine according to the invention;
- figure 4 is a cross-section view made along a broken line A-B-C in figure 3;
- figure 5 is a fragmentary side view similar to that in figure 3, that shows in a partially cross-sectioned way a drive assembly of a second embodiment of the machine according to the invention;
- figure 6 is a cross-section view similar to that in figure 4, of the drive assembly of the second embodiment of figure 5; and
- figure 7 is a reduced side view showing an extendable corrugated hose that is partially extended and bent with respect to the machine according the invention.

### PREFERRED EMBODIMENTS OF THE INVENTION

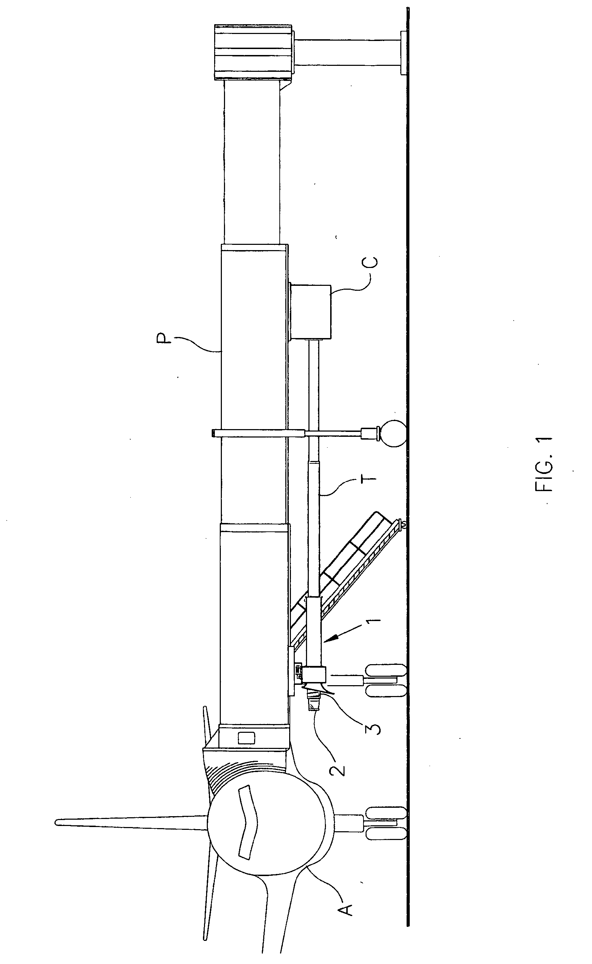

First referring to figure 1, there is shown a partial front view of a stationary aircraft A connected to a passenger boarding bridge P being provided with a conditioned air system C for delivering conditioned air into the aircraft. From the conditioned air system C an air pipe T is connected to a machine 1 for extending and retracting an extendable corrugated hose 3 according to the invention.

The free end 2 of the extendable corrugated hose 3 is designed to be manually attached to the fuselage of the aircraft A.

The machine 1, which will be described and illustrated below with reference to two embodiments thereof, serves to facilitate the travelling of the free end of the extendable corrugated hose to the fuselage of the aircraft A and the retraction thereof, when the extendable corrugated hose is detached from the fuselage.

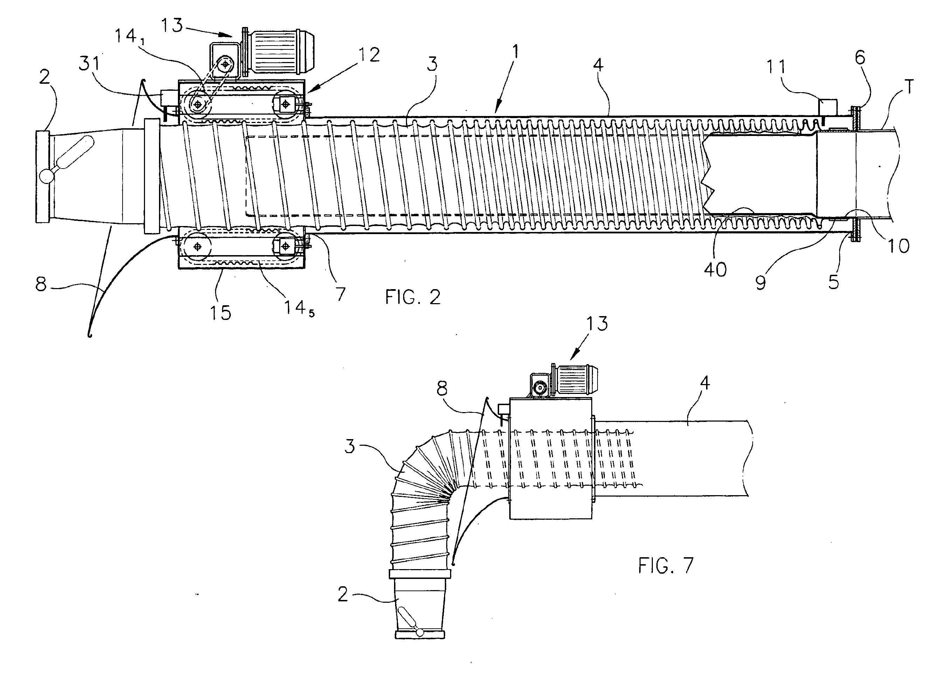

With reference to figure 2 there is shown a first embodiment of the machine for extending and retracting the extendable corrugated hose 3. The machine comprises a tubular housing 4 that in a rear end 5 thereof is fixed to the air pipe T by means of flanged coupling 6.

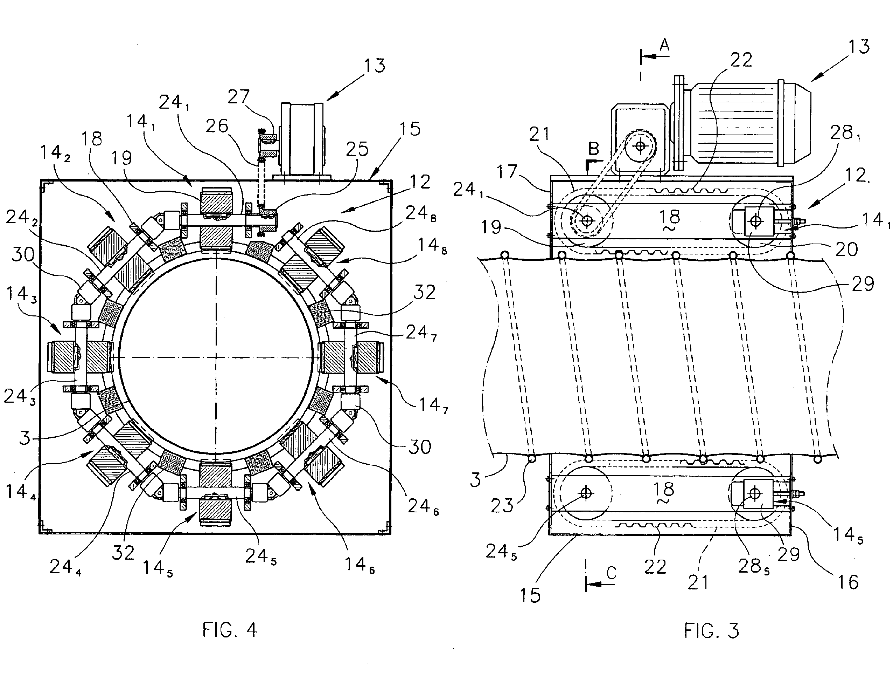

As shown, in figure 3, which is a furthermore enlarged fragmentary side view in figure 2, the tubular housing 4, in the front end 7 thereof, is fixed to the rear wall 16 of a box-shaped structure 15, being fastened in a suitable way (not shown in detail) to the bridge P. The rear wall 16 and the opposite front wall 17 are provided both with a central hole for the passage of the extendable corrugated hose 3. A divergent element 8 adapted to protect and carry the extendable corrugated hose 3 is fixed to the front wall 17 of the box-shaped structure 15 around the central hole thereof. The divergent element 8 is preferably asymmetrical as it widens downward, because it is in this direction that the extendable corrugated hose 3 bends generally along an elbow when the extendable corrugated hose 3 is handled by operators. The tubular housing 4 serves to store the extendable corrugated hose 3 in a retracted condition. In particular, a rear end 9 of the extendable corrugated hose 3 is hermetically sealed on a fitting 10 as an extension of the air pipe T. Advantageously, the air pipe extends concentrically along the extendable corrugated hose 3 inside the tubular housing 4, in a section 40 that serves to make uniform the air flow, without the turbulence that, without the section 40, would be caused by the not smoothed walls of the extendable corrugated hose 3.

Proximate the attack point of the rear end 9 of the extendable corrugated hose 3 is provided on the tubular housing 4 a limit switch 11 for detecting the complete extension of the hose.

A drive assembly 12 according to the invention is comprised of a plurality of drives 14₁, 14₂, ..., 14₈, being eight in this embodiment, which are mounted on support brackets 18 circumferentially spaced and fixed to the opposite rear and front walls 16, 17 of the box-shaped structure 15 that, as above said, is positioned in the front end 7 of the tubular housing 4. Thus the drives 14₁, 14₂, ..., 14₈ are situated concentrically around the extendable corrugated hose 3.

Besides the plurality of drives, the drive assembly 12 comprises a driving unit 13. For better understanding reference is made to figure 3, that shows in a partially cross-sectioned view the drive assembly 12 of drives 14 in the first embodiment of the machine according to the invention, and to figure 4 that is a cross-section view made along the broken line A-B-C in figure 3. According to the illustrated embodiment, each drive 14₁, 14₂, ..., 14₈ comprises a pair of a driving pulley 19 and driven pulley 20, and a flexible transmission member running on the pulleys 19, 20.

In this embodiment, the flexible transmission member is a toothed belt 21 whose teeth 22 are designed to engage projecting spirals 23 of the extendable corrugated hose 3.

It may occur that in the same time each drive receives the projecting spirals 23 both in a recess between a tooth and the other of the toothed belt 21 and on the tooth head of the teeth 22. This does not influence the efficiency of the drive assembly in extending the corrugated hose in virtue of the elasticity of the toothed belt 21. In other words, in any case an extension of the corrugated hose is achieved in which the pitch of the projecting spiral 23 increases independently of the pitch of the teeth 22 of the toothed belt 21. The driving pulley 19 of the drive 14₁ is keyed on a driving shaft 24₁ that is connected to the driving unit 13 through a pulley shaft pinion 25, a transmission chain 26 and a driving shaft pinion 27. The driving shaft 24₁, as well as the driving shafts 24₂, 24₃, ..., 24₈ of the driving pulleys 19 of the other drives 14₂, 14₃, ... 14₈, is mounted by means of bearings on the support brackets 18. A driven shaft 28₁ of the driven pulley 20, as well as the driven shafts of the driven pulleys of the other drives, is mounted by means of bearings on belt stretcher slides 29 sliding on the support brackets 18.

According to the invention, the driving shaft 24₁ of the drive 14₁ is in kinematic coupling with adjacent drives as it is connected to the driving shaft 24₂ of the drive 14₂ by a coupling generally indicated as 30. In the same way, the driving shaft 24₂ of the drive 14₂ is connected to the driving shaft 24₃ of the drive 14₃ by another coupling 30 and so on, until the driving shaft 24₈ of the drive 14₈ that is the last drive in the succession in the described embodiment.

The teeth 22 of the toothed belt 21 engage the projecting spirals 23 of the extendable corrugated hose 3 and allow the latter to be moved and extended in the extending phase. In the retraction phase a limit sensor 31 (figure 2) stops the operation of the drives 14₁, 14₂, ... 14₈ when the extendable corrugated hose 3 is completely stored in the tubular housing 4.

In order to extend and retracting uniformly the extendable corrugated hose 3 a hose guide element 32 in the form of a prismatic section is situated between a drive and the adjacent one in such a manner that the extendable corrugated hose 3 is continuously kept in its original cylindrical form without any risk of sliding during the travelling.

Advantageously, the multiplicity of prismatic sections forms a cage in which the extendable corrugated hose 3 can slide inside. For this purpose the hose guide element 32 is made of an antifriction material, for example, a highest molecular weight polyethylene material that in known also through the commercial names of polizene® and polystone®.

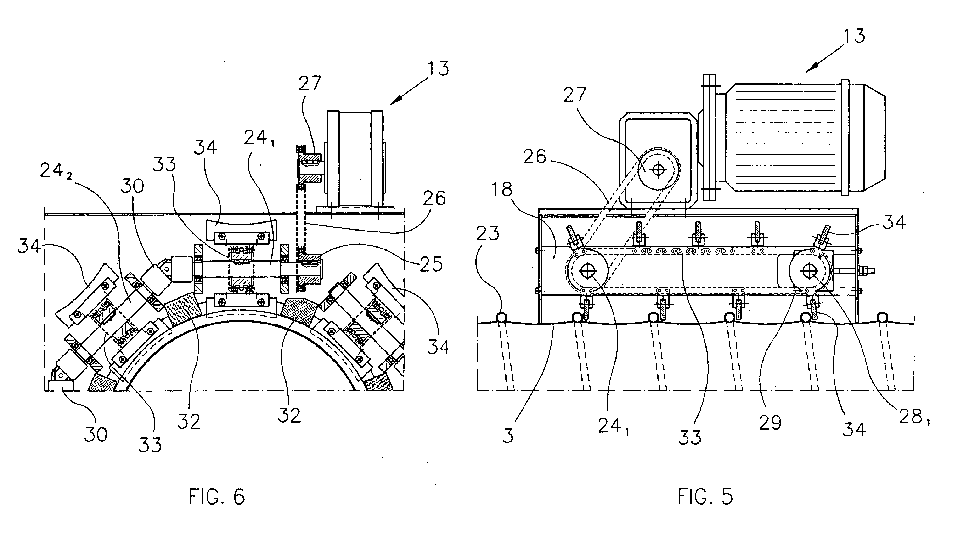

A second embodiment of the invention is shown in figures 5 and 6, which are similar to figures 3 and 4 of the first embodiment. Same reference numerals have been given to the same components. This embodiment differs from the first one as the flexible transmission element is a chain 33 on the links of which a multiplicity of blades 34 being designed to engage the projecting spirals 23 of the extendable corrugated hose 3 is fixed. The rather rigid blades 34 are spaced from each other with a determined pitch so to increase the pitch of the projecting spiral 23 in the extension phase until the same pitch of the blades 34 is reached. In the retraction phase of the extendable corrugated hose 3, the compaction of the latter inside the tubular housing 4 occurs automatically since the rear end 9 of the extendable corrugated hose 3 is fixed on the fitting 10 of the pipe.

Other modifications can be provided in designing the flexible transmission element, and it should be understood that all the modifications are included in the scope of the present invention.

With reference to figure 7, which is a reduced side view of the machine according to the invention, there is shown that the machine according to the invention allows the extendable hose to be bent also with a sharp angle downstream the drive assembly, and it works in the same way without meeting obstacles both in the extension and in the retraction of the hose. Differently from the apparatuses in the prior art, the machine according to the invention permits without any problem an extension and a retraction of the extendable corrugated hose, without the need of an inner mandrel being inside the hose and matching with the drives.

## Claims

1. A machine (1) for extending and retracting an extendable corrugated hose (3), comprising a tubular housing (4) for storing the extendable corrugated hose (3) in a retracted condition, tubular housing (4) having a rear end (5), which is connected to a pipe (T), and a front end (7), and a drive assembly (12) of a plurality of drives (14₁, 14₂, ..., 14ₙ) the drives (14₁, 14₂, ..., 14ₙ), being individually provided with a driving shaft and adapted to act by surface engaging means on the extendable corrugated hose (3) projecting from the front end (7) of the tubular housing (4), the only first drive (14₁) or main drive having its first driving shaft (24₁) connected to the driving shaft of a driving unit (13), **characterised in that** each driving shaft (24₂, ..., 24n) of the drives (14₂, ..., 14ₙ) being subsequent to the first drive (14₁) is coupled by a coupling (30), at one of its ends, to the driving shaft (24₁, ..., 24ₙ₋₁) of the preceding drive (14₁, ..., 14ₙ₋₁), and at its opposite end, to the driving shaft of the subsequent drive (14₃, ..., 14ₙ) except for the last drive (14ₙ), the opposite end of its shaft (24ₙ) being free.

2. The machine (1) according to claim 1, wherein each drive (14₁, 14₂, ..., 14ₙ) comprises at least a pair of pulley (19, 20), at least one (19) of which is a driving pulley, being keyed on a driving shaft (24₁, ..., 24ₙ) and a flexible transmission member running on the pulleys (19, 20).

3. The machine (1) according to claim 2, wherein the flexible transmission member is a toothed belt (21) adapted to engage projecting spirals (23) of the extendable corrugated hose (3).

4. The machine (1) according to claim 2, wherein the flexible transmission member is a chain (33) provided with a multiplicity of blades (34) adapted to engage projecting spirals (23) of the extendable corrugated hose (3).

5. The machine (1) according to claim 1, wherein at least one hose guiding element (32) is provided between a drive and the adjacent one.

6. The machine (1) according to claim 5, wherein the hose guiding element (32) is a prismatic section bar made of an antifriction material that is rigidly fixed between adjacent drives to constitute a retaining cage so that the extendable corrugated hose (3) can slide inside it.

7. The machine (1) according to claim 6, wherein the antifriction material is a highest molecular weight polyethylene.

8. The machine (1) according to claim 1, wherein the plurality of drives (14₁, 14₂, ..., 14ₙ) is mounted on supporting brackets (18) that are circumferentially spaced and fastened at the ends thereof to opposite rear and front walls (16, 17) of a box-shaped structure (15), that is situated at the front end (7) of the tubular housing (4), the rear and front walls (16, 17) being provided with coaxial central holes for the passage of the extendable corrugated hose (3) through the box-shaped structure (15).

9. The machine (1) according to claim 1, wherein a divergent member (8) is fixed to the front wall (17) around the central hole thereof for protecting and conveying the extendable corrugated hose (3) downstream the drive assembly (12) of the drives (14_{1,} 14₂, ..., 14ₙ).

10. The machine (1) according to claim 1, wherein the pipe (T) extends concentrically to a section (40) thereof in the extendable corrugated hose (3) inside the tubular housing (4).

## Patentansprüche

1. Maschine (1) zum Ausziehen und Einziehen eines ausziehbaren Wellschlauchs (3), umfassend ein röhrenförmiges Gehäuse (4) zum Aufbewahren des ausziehbaren Wellschlauchs (3) in einem eingezogenen Zustand, wobei das röhrenförmige Gehäuse (4) ein hinteres Ende (5), das mit einem Rohr (T) verbunden ist, und ein vorderes Ende (7) aufweist, und eine Antriebsbaugruppe (12) von mehreren Antrieben (14₁, 14₂,..., 14ₙ), wobei die Antriebe (14₁, 14₂,..., 14ₙ) jeweils mit einer Antriebswelle versehen sind und dazu ausgelegt sind, durch Oberflächeneingriffsmittel auf den ausziehbaren Wellschlauch (3) einzuwirken, das aus dem vorderen Ende (7) des röhrenförmigen Gehäuses (4) vorsteht, wobei der einzige erste Antrieb (14₁) oder Hauptantrieb seine erste Antriebswelle (24₁) mit der Antriebswelle oder Antriebseinheit (13) verbunden aufweist, **dadurch gekennzeichnet, dass** jede Antriebswelle (24₂,..., 24ₙ) der Antriebe (14₂,..., 14ₙ), die auf den ersten Antrieb (14₁) folgen, an einem ihrer Enden durch eine Kupplung (30) an die Antriebswelle (24₁, .., 24ₙ₋₁) des vorhergehenden Antriebs (14₁,..., 14ₙ₋₁) und an ihrem gegenüberliegenden Ende an die Antriebswelle des darauf folgenden Antriebs (14_{3,} ..., 14ₙ) gekoppelt ist mit Ausnahme des letzten Antriebs (14ₙ), dessen gegenüberliegendes Ende seiner Welle (24ₙ) frei ist.

2. Maschine (1) nach Anspruch 1, wobei jeder Antrieb (14₁, 14₂,..., 14ₙ) zumindest ein Paar Scheiben (19, 20), von denen zumindest eine (19) eine Antriebsscheibe ist, die auf einer Antriebswelle (24₁, ..., 24ₙ) verkeilt ist, und ein flexibles Transmissionsglied umfasst, das auf den Scheiben (19, 20) läuft.

3. Maschine (1) nach Anspruch 2, wobei das flexible Transmissionsglied ein Zahnriemen (21) ist, der dazu geeignet ist, vorstehende Spiralen (23) des ausziehbaren Wellschlauchs (3) in Eingriff zu nehmen.

4. Maschine (1) nach Anspruch 2, wobei das flexible Transmissionsglied eine Kette (33) ist, die mit mehreren Blättern (34) versehen ist, welche dazu geeignet sind, vorstehende Spiralen (23) des ausziehbaren Wellschlauchs (3) in Eingriff zu nehmen.

5. Maschine (1) nach Anspruch 1, wobei zumindest ein Rohrführungselement (32) zwischen einem Antrieb und dem benachbarten Antrieb vorgesehen ist.

6. Maschine (1) nach Anspruch 5, wobei das Rohrführungselement (32) eine Stange mit prismatischem Schnitt ist, die aus einem reibungsminderndem Material hergestellt ist und zwischen benachbarten Antrieben zum Bilden eines Haltekäfigs starr befestigt ist, so dass der ausziehbare Wellschlauch (3) dort hinein gleiten kann.

7. Maschine (1) nach Anspruch 6, wobei das reibungsmindernde Material Polyethylen mit höchstem Molekulargewicht ist.

8. Maschine (1) nach Anspruch 1, wobei die mehreren Antriebe (14₁, 14₂,..., 14ₙ) auf Stützauflagen 18) angebracht sind, die in Umfangsrichtung beabstandet und an den Enden davon an gegenüberliegenden hinteren und vorderen Wänden (16, 17) einer kastenartigen Struktur (15) befestigt sind, welche sich am vorderen Ende (7) des röhrenförmigen Gehäuses (4) befindet, wobei die hinteren und vorderen Wände (16, 17) mit koaxialen mittigen Löchern für den Durchgang des ausziehbaren Wellschlauchs (3) durch die kastenartige Struktur (15) versehen sind.

9. Maschine (1) nach Anspruch 1, wobei ein divergierendes Glied (8) zum Schützen und Befördern des ausziehbaren Wellschlauchs (3) stromabwärts von der Antriebsbaugruppe (12) der Antriebe (14₁, 14₂,..., 14ₙ) an der vorderen Wand (17) um das mittige Loch davon befestigt ist.

10. Maschine (1) nach Anspruch 1, wobei das Rohr (T) konzentrisch zu einem Teilabschnitt (40) davon im ausziehbaren Wellschlauch (3) innerhalb des röhrenförmigen Gehäuses (4) verläuft.

## Revendications

1. Machine (1) pour étendre et rétracter un tuyau ondulé extensible (3), comprenant un boîtier tubulaire (4) pour poser le tuyau ondulé extensible (3) dans un état rétracté, le boîtier tubulaire (4) ayant une extrémité arrière (5), qui est reliée à un tuyau (T), et une extrémité avant (7), et un ensemble d'entraînement (12) d'une pluralité d'entrainements (141₁, 14₂,...,14ₙ) les entrainements (14₁, 14₂, 14ₙ) étant individuellement équipés d'un arbre d'entraînement et destinés à agir par des éléments d'engagement de surface sur le tuyau ondulé extensible (3) se projetant de l'extrémité avant (7) du boîtier tubulaire (4), le seul et premier entraînement (14₁) ou entrainement principal ayant son premier arbre d'entrainement (24₁) relié à l'arbre d'entrainement d'un dispositif d'entrainement (13), **caractérisé en ce que** chaque arbre d'entrainement (24₂, ..., 24n) des entrainements (14₂,..., 14ₙ) étant postérieur au premier entrainement (14₁) est couplé par un accouplement (30), à une de ses extrémités, à l'arbre d'entrainement (24₁,...,24ₙ₋₁) de l'entrainement précédent (14₁,..., 14ₙ₋₁) et à son extrémité opposée, à l'arbre d'entrainement de l'entrainement postérieur (14₃,..., 14ₙ) exception faite du dernier entrainement (14ₙ), l'extrémité opposée de son arbre (24ₙ) étant libre.

2. Machine (1) selon la revendication 1, dans laquelle chaque entrainement (14₁, 14₂,...,14ₙ) comprend au moins une paire de poulies (19, 20), dont au moins une (19) est une poulie d'entraînement, étant verrouillée sur un arbre d'entraînement (24₁,...,24ₙ₋₁) et un organe de transmission flexible fonctionnant sur les poulies (19, 20).

3. Machine (1) selon la revendication 2, dans laquelle l'élément de transmission flexible est une courroie dentée (21) adaptée pour engager des spirales en saillie (23) du tuyau ondulé extensible (3).

4. Machine (1) selon la revendication 2, dans laquelle l'élément de transmission flexible est une chaîne (33) pourvue d'une multiplicité d'aubes (34) adaptées pour engager des spirales en saillie (23) du tuyau ondulé extensible (3).

5. Machine (1) selon la revendication 1, dans laquelle au moins un élément de guidage de tuyau (32) est prévu entre un entraînement et celui adjacent.

6. Machine (1) selon la revendication 5, dans laquelle l'élément de guidage du tuyau (32) est une barre de section prismatique en un matériel antifriction qui est rigidement fixé entre les entrainements adjacents pour constituer une cage de retenue de telle sorte que le tuyau ondulé extensible (3) puisse coulisser à l'intérieur.

7. Machine (1) selon la revendication 6, dans laquelle le matériel antifriction est un polyéthylène de poids moléculaire plus élevé.

8. Machine (1) selon la revendication 1, dans laquelle la pluralité des entrainements (14₁, 14₂, ...., 14ₙ) est montée sur des supports (18) circonférentiellement espacés et fixés à leurs extrémités aux arrières opposés et aux parois de face (16,17) d'une structure en forme de boîte (15), qui est située à l'extrémité avant (7) du boîtier tubulaire (4), les parois arrière et avant (16,17) étant munies d'orifices centraux coaxiaux pour le passage du Tuyau ondulé extensible (3) à travers la structure en forme de boîte (15).

9. Machine (1) selon la revendication 1, dans laquelle un élément divergent (8) est fixé à la paroi avant (17) autour de l'orifice central de celle-ci pour la protection et la pose du tuyau ondulé extensible (3) en aval de l'ensemble d'entraînement (12) des entrainements (14₁, 14₂,...,14ₙ).

10. Machine (1) selon la revendication 1, dans laquelle le tuyau (T) s'étend de manière concentrique à une de ses sections (40) dans le tuyau ondulé extensible (3) à l'intérieur du boîtier tubulaire (4).
